# EUROPÄISCHE PATENTSCHRIFT

(11) **EP 1 170 334 B1**
(45) Veröffentlichungstag und Bekanntmachung des Hinweises auf die Patenterteilung: **07.11.2007**
(21) Anmeldenummer: 01110643.2
(22) Anmeldetag: 02.05.2001
(51) Int. Cl.: C08L 77/00, C08L 77/02, C08L 77/06

(54) **Verwendung von tieftemperaturschlagzäher Polyamidlegierung zur Herstellung eines Automobilkonstruktionsteils**
Use of a low-temperature shock resistant polyamide composition for the manufacture of an automotive part
Utillisation d'une composition à base de polyamide résistante aux chocs à basse température pour la fabrication de pièces automobiles

(30) Priorität: 23.06.2000 DE 10030716
(43) Veröffentlichungstag der Anmeldung: 09.01.2002
(73) Patentinhaber: Evonik Degussa GmbH, 40474 Düsseldorf (DE)
(72) Erfinder: Häger, Harald, Dr., 45665 Recklingshausen (DE); Schmitz, Guido, Dr., 48249 Dülmen (DE); Baumann, Franz-Erich, Dr., 48249 Dülmen (DE); Bartz, Wilfried, Dr., 45770 Marl (DE); Oenbrink, Georg, Dr., 48249 Dülmen (DE)

(56) Entgegenhaltungen:
- EP-A- 0 564 338
- EP-A- 0 731 308
- WO-A-00/22031
- WO-A-95/22579
- WO-A-97/35910
- US-A- 5 317 059
- US-A- 5 708 088

## Beschreibung

Gegenstand der Erfindung ist die Verwendung eines tieftemperaturschlagzähen Werkstoffs, der neben Polyamid (PA) als Matrixpolymer zusätzlich mindestens zwei Polymere enthält, die die Schlagzähigkeit des Werkstoffs verbessern und hierbei synergistisch zusammenwirken zur Herstellung eines Konstruktionsteils im Bereich der Automobilindustrie. Die Erfindung hat darüber hinaus auch dieses Konstruktionsteil zum Gegenstand.

Konstruktionsteile im Bereich der Automobilindustrie, beispielsweise Mono- oder Mehrschichtrohre für Kraftstoffleitungen, müssen heute sehr rigide Anforderungen hinsichtlich der Kälteschlagzähigkeit erfüllen. Hierzu werden Prüfungen nach unterschiedlichen Verfahren bei Prüftemperaturen von beispielsweise -40 °C durchgeführt.

Allerdings weisen Polyamide wie z. B. PA 46, PA 66, PA 412, PA 612, PA 6, PA 11 und PA 12, die für derartige Konstruktionsteile häufig verwendet werden, nach dem Zusatz von Weichmachern bekanntermaßen eine schlechte Tieftemperaturschlagzähigkeit auf, welche es unumgänglich macht, die genannten Materialien entsprechend zu modifizieren.

Die WO 95/22579 beschreibt die Schlagzähmodifizierung von Polyamiden mit zwei Schlagzähmodifiern, wobei der eine Modifier ein modifizierter EPM- bzw. EPDM-Kautschuk ist, während als weiterer Modifier ein Terpolymeres aus Ethylen, einem Acrylester und Glycidyl(meth)acrylat eingesetzt wird. Diese Schrift macht zum Aminoendgruppengehalt des Polyamids keine Aussagen. Da normalerweise schon bei einem beträchtlichen Unterschuss an Aminoendgruppen eine gute Anbindung zwischen maleinsäureanhydridfunktionalisiertem EPM- oder EPDM-Kautschuk und Polyamid erzielt wird, verwundert dies nicht weiter.

Die Verwendung ähnlicher Formmassen als Schichtenmaterial in Mehrschichtrohren ist in der EP-A-0 731 308 beschrieben. Auch hier wird keine Aussage zum Aminoendgruppengehalt des Polyamids gemacht.

Die US 5 317 059 beschreibt Polymerzusammensetzungen aus einem Polyolefin, einem Polyamid, einem Verträglichkeitsvermittler auf Basis eines Terpolymers und gegebenenfalls einem zweiten Verträglichkeitsvermittler, die unter anderem für nicht näher spezifizierte automobile Anwendungen verwendet werden können. In der WO 00/22031 und der WO 97/35910 werden Zusammensetzungen aus Polyamid, einem Co- oder Terpolymer, einem Polymer mit reaktiven Gruppen und einem gepfropften Polyolefin beschrieben, die für Verpackungsfolien eingesetzt werden. Die US 5 708 088 und die EP-A-0 564 338 haben Formmassen aus Polyamid, einem Terpolymer und gegebenenfalls einem Olefinhomo-, -co- oder -terpolymeren zum Gegenstand, die im Bereich der Automobilindustrie eingesetzt werden können.

Der Erfindung liegt die Aufgabe zugrunde, Konstruktionsteile im Bereich der Automobilindustrie mit besonders hoher Tieftemperaturschlagzähigkeit bereitzustellen. Eine weitere Aufgabe bestand darin, derartige Konstruktionsteile bereitzustellen, welche mit einem möglichst geringen Gehalt an Schlagzähmodifiern auskommen, um andere wichtige Eigenschaften so wenig wie möglich zu beeinflussen. Schliesslich sollte eine Maßnahme gefunden werden, um in weichmacherhaltigen Polyamidformmassen dem tieftemperaturschlagzähigkeitsverringernden Effekt des Weichmachers entgegenzuwirken.

Diese Aufgaben wurden gelöst durch die Verwendung einer Formmasse, die folgende Komponenten enthält:
I. 60 bis 96,5 Gew.-Teile Polyamid,
II. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
III. 0,5 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß I., II. und III. 100 beträgt,
dadurch gekennzeichnet, dass das Polyamid einen Überschuss an Aminoendgruppen gegenüber den Carboxylendgruppen besitzt, zur Herstellung eines im. Anspruch 1 definierten Konstruktionsteils.

In bevorzugten Ausführungsformen enthält die Formmasse hierbei:
I. 65 bis 90 Gew.-Teile und besonders bevorzugt 70 bis 85 Gew.-Teile Polyamid,
II. 5 bis 30 Gew.-Teile, besonders bevorzugt 6 bis 25 Gew.-Teile und insbesondere bevorzugt 7 bis 20 Gew.-Teile der Schlagzähkomponente,
III. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Als Polyamide kommen in erster Linie aliphatische Homo- und Copolykondensate in Frage, beispielsweise PA 46, PA 66, PA 68, PA 610, PA 612, PA 410, PA 810, PA 1010, PA 412, PA 1012, PA 1212, PA 6, PA 7, PA 8, PA 9, PA 10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer α, ω-Aminocarbonsäure bzw. von dem davon abgeleiteten Lactam ausgegangen worden ist; im Übrigen sei verwiesen auf H. Domininghaus, Die Kunststoffe und ihre Eigenschaften, Seiten 272 ff., VDI-Verlag, 1976.)

Sofern Copolyamide verwendet werden, können diese z.B. Adipinsäure, Sebacinsäure, Korksäure, Isophthalsäure, Terephthalsäure, oder Naphthalin-2.6-dicarbonsäre als Cosäure bzw. Bis(4-aminocyclohexyl)methan, Trimethylhexamethylendiamin oder Hexamethylediamin Ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z.B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328 ff. und 435 ff., Wiley & Sons, 1982, beschrieben werden.

Geeignete Ethylen/α-Olefin-Copolymere der Komponente gemäß II. sind vorzugsweise:
- Ethylen/C₃- bis C₁₂-α-Olefin-Copolymere mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind EthylenPropylen-Kautschuk sowie LLDPE und VLDPE.
- Ethylen/C₃- bis ₁₂-α-Olefin/unkonjugiertes Dien-Terpolymere mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder insbesondere 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere mit Hilfe eines Ziegler-Natta-Katalysators ist Stand der Technik.

Als Styrol-Ethylen/Butylen-Blockcopolymere werden vorzugsweise Styrol-Ethylen/Butylen-Styrol-Blockcopolymere (SEBS) eingesetzt, die durch Hydrierung von Styrol-Butadien-Styrol-Blockcopolymeren erhältlich sind. Es können aber auch Diblocksysteme (SEB) oder Multiblocksysteme verwendet werden. Derartige Blockcopolymere sind Stand der Technik.

Die Komponente II. enthält Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagentien sind beispielsweise Maleinsäure, Maleinsäureanhydrid, Maleinsäuremonobutylester, Fumarsäure, Aconitsäure oder Itaconsäureanhydrid. Auf diese Weise sind vorzugsweise 0,1 bis 4 Gew.-% eines ungesättigten Anhydrids an die Schlagzähkomponente II. aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Das Copolymere der Komponente III. ist beispielsweise aus folgenden Monomeren zusammengesetzt, wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon.

Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht. In dieser speziellen Ausführungsform enthält das Copolymere Einheiten der folgenden Monomere:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Das Copolymere der Komponente III. kann in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER® (Elf Atochem; Ethylen/Acrylat/Terkomponente bzw. Ethylen/Glycidylmethacrylat).

Das Polyamid der Komponente gemäß I. weist einen Überschuss an Aminoendgruppen auf, der in der Regel davon herrührt, dass bei der Herstellung ein Diamin als Molekulargewichtsregler eingesetzt wurde. Der Überschuss an Aminoendgruppen kann auch durch Mischen eines aminogruppenarmen und eines aminogruppenreichen Polyamids eingestellt werden. Das Verhältnis von Aminoendgruppen zu Carboxylendgruppen soll mindestens 51 : 49, bevorzugt mindestens 55 : 45, besonders bevorzugt mindestens 60 : 40 und insbesondere bevorzugt mindestens 70 : 30 betragen.

In einer vorteilhaften Ausführungsform liegt ein Teil des Polyamids der Komponente I. als Polyamin-Polyamid-Copolymer vor, und zwar im allgemeinen 0,1 bis 10 Gew.-Teile, bevorzugt 0,2 bis 5 Gew.-Teile und besonders bevorzugt 0,25 bis 3 Gew.-Teile. Das Polyamin-Polyamid-Copolymer wird unter Verwendung folgender Monomere hergestellt:
a) 0,5 bis 25 Gew.-%, bevorzugt 1 bis 20 Gew.-% und besonders bevorzugt 1,5 bis 16 Gew.-%, bezogen auf das Polyamin-Polyamid-Copolymer, eines Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
b) polyamidbildende Monomere, ausgewählt aus Lactamen, ω-Aminocarbonsäuren und/oder äquimolaren Kombinationen von Diamin und Dicarbonsäure.
   In einer bevorzugten Ausführungsform liegt die Aminogruppenkonzentration des Polyamin-Polyamid-Copolymers im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE-OS 196 54 058);
- Dendrimere wie beispielsweise
   ((H₂N-(CH₂)₃)₂N-(CH₂)₃)₂-N(CH₂)₂-N((CH₂)₂-N((CH₂)₃-NH₂)₂)₂
   (DE-A-196 54 179) oder
   Tris(2-aminoethyl)amin, N,N-Bis(2-aminoethyl)-N',N'-bis[2-[bis(2-aminoethyl)amino]-ethyl]-1,2-ethandiamin,
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, w-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

In einer bevorzugten Ausführungsform wird das Polyamin-Polyamid-Copolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und inbesondere 0,04 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z.B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen eingeführt werden. Es ist aber erwünscht, dass das Polyamin-Polyamid-Copolymer einen substantiellen Anteil an Aminogruppen besitzt. Vorzugsweise liegt die Aminogruppenkonzentration dieses Copolymers im Bereich von 150 bis 1 500 mmol/kg, besonders bevorzugt im Bereich von 250 bis 1 300 mmol/kg und ganz besonders bevorzugt im Bereich von 300 bis 1 100 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die erfindungsgemäßen Polyamin-Polyamid-Copolymere können nach verschiedenen Verfahren hergestellt werden.

Eine Möglichkeit besteht darin, Lactam bzw. ω-Aminocarbonsäure und Polyamin zusammen vorzugeben und die Polymerisation bzw. die Polykondensation durchzuführen. Die Oligocarbonsäure kann entweder am Anfang oder im Verlauf der Reaktion zugegeben werden.

Ein bevorzugtes Verfahren besteht jedoch darin, dass in einem zweistufigen Prozeß zuerst die Lactamspaltung und Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, dass eine Reaktion von Aminoendgruppen miteinander unter Ammoniakabspaltung und Kettenverknüpfung stattfindet. Hierdurch wird das Molekulargewicht weiter erhöht, was insbesondere für Extrusionsformmassen vorteilhaft ist.

Falls man die Reaktion nicht in der Schmelze zu Ende führen will, kann das Polyamin-Polyamid-Copolymere gemäß dem Stand der Technik auch in fester Phase nachkondensiert werden.

Mit Hilfe des Polyamin-Polyamid-Copolymeren kann das Verhältnis von Aminoendgruppen zu Carboxylendgruppen in der Komponente I. gezielt eingestellt werden. Hiermit wird eine noch bessere Wechselwirkung zwischen der Komponente I. einerseits und den Komponenten II. und III. andererseits erzielt, so dass eine noch weitere Verbesserung der Tieftemperaturschlagzähigkeit erhalten wird. Gleichzeitig sinkt durch den Zusatz dieses Copolymers auch die Schmelzeviskosität, so dass sich derartige Formmassen leichter verarbeiten lassen. Da normalerweise Schmelzeviskosität und Schlagzähigkeit gegenläufig sind, ist dieser Befund überraschend.

Neben den Bestandteilen unter I. bis III. kann die Formmasse noch kleinere Mengen von Zusatzstoffen enthalten, die zum Einstellen bestimmter Eigenschaften benötigt werden. Beispiele hierfür sind Weichmacher, Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer bevorzugten Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid in Frage.

Die erfindungsgemäß verwendete Formmasse dient zur Herstellung von Konstruktionsteilen im Bereich der Automobilindustrie. In der Regel handelt es sich hier um Rohre, Einfüllstutzen oder Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik (z.B. US 5 460 771), weshalb sich weitere Ausführungen hierzu erübrigen. Wichtige Einsatzzwecke sind die Verwendung als Kraftstoffleitung, als Tankeinfüllrohr, als Vapor Line (d.h. Leitung, in der Kraftstoffdämpfe geleitet werden, z.B. Entlüftungsleitungen), als Kühlflüssigkeitsleitung, als Klimaanlagenleitung oder als Kraftstoffbehälter. Darüber hinaus wird die Formmasse vorteilhaft für Quickconnectoren, Pumpengehäuse, Kraftstofffiltergehäuse, Aktivkohlekanister, Ventilgehäuse, Schwalltöpfe, Anbindungselemente an Kunststoffkraftstoffbehältern, Tankeinfüllstutzen, Kabelbeschichtungen für Elektrokabel, Gehäuse für Hydraulikzylinder, Scheibenwaschanlagenleitungen, Kupplungsleitungen, Unterdruckleitungen, Entlüftungsleitungen, Hydraulikleitungen oder Druckluftbremsleitungen verwendet.

Weiterhin dient die erfindungsgemäße Formmasse zur Herstellung von Tankstellenleitungen.

Alle diese Formteile können entweder vollständig aus der erfindungsgemäßen Formmasse bestehen, oder sie enthalten die erfindungsgemäße Formmasse als eine von mehreren Schichten, beispielsweise als festigkeitsvermittelnde Außenschicht oder als Innenschicht, etwa in einem Mehrschichtrohr oder Mehrschichtbehälter.

Die erfindungsgemäßen Formteile können nach allen üblichen Methoden des Standes der Technik hergestellt werden, beispielsweise durch Extrusion, Coextrusion, Blasformen oder Spritzguss.

### Beispiele

In den Versuchen wurden folgende Materialien verwendet:
- PA1:: Ein handelsübliches PA 612 mit einem Überschuss an Carboxylendgruppen (Säurezahl: 60 mmol/kg; Aminoendgruppenkonzentration: 11 mmol/kg); ηᵣₑₗ = 2,2; VESTAMID® D22 der DEGUSSA-HÜLS AG
- PA2:: Ein PA 612 mit einem Überschuss an Aminoendgruppen (Säurezahl: 27 mmol/kg; Aminoendgruppenkonzentration: 48 mmol/kg) ηᵣₑₗ = 2,2
- EXXELOR® VA 1803:: Ein maleinsäureanhydridgepfropfter Ethylen/Propylen-Kautschuk als Schlagzähkomponente (EXXON Chemicals)
- LOTADER® AX 8900:: ein statistisches Terpolymer aus Ethylen, ca. 32 Gew.-% Acrylsäureestern und ca. 7-9 Gew.-% Glycidylmethacrylat der Fa. ATOCHEM
- BBSA:: N-Butylbenzolsulfonsäureamid (Weichmacher)

### Vergleichsbeispiel 1:

Auf einem Doppelschneckenkneter ZE 25 33D der Firma Berstorff wurden 100 Gew.-Teile PA1, 10 Gew.-Teile BBSA, 10 Gew.-Teile EXXELOR® VA 1803 und 1 Gew.-Teil LOTADER® AX 8900 bei 250 °C und 200 U/min sowie einem Durchsatz von 10 kg/h schmelzegemischt, stranggepresst und granuliert. Anschließend wurden aus dem Granulat durch Extrusion Monorohre in den Abmessungen 8 x 1 mm (d. h. 8 mm Außendurchmesser und 1 mm Wandstärke) hergestellt. Die Ergebnisse der Schlagprüfung sind in der Tabelle 1 wiedergegeben.

### Beispiel 1:

Auf einem Doppelschneckenkneter ZE 25 33D der Firma Berstorff wurden 100 Gew.-Teile PA2, 10 Gew.-Teile BBSA, 10 Gew.-Teile EXXELOR® VA 1803 und 1 Gew.-Teil LOTADER® AX 8900 wie im Vergleichsbeispiel 1 gemischt und weiterverarbeitet. Die Ergebnisse der Schlagprüfung sind in der Tabelle 1 wiedergegeben.

### Vergleichsbeispiel 2:

Wie Beispiel 1, aber ohne LOTADER® AX 8900 ; siehe Tabelle 1.

**Tabelle1: Schlagzähigkeit bei -40 °C, gemessen an Rohren mit den Maßen 8 x 1 mm**

| **Norm** | **Bruchquote:** | | |
|---|---|---|---|
| | **Anzahl der Brüche bei 10 geprüften Rohren** | | |
| | **Vergleichsbeispiel 1** | **Beispiel 1** | **Vergleichsbeispiel 2** |
| SAE J844 | 2 | 0 | 1 |
| (Schlaggewicht 455 g) | | | |
| SAE J 2260 | 0 | 0 | 0 |
| (Schlaggewicht 912 g) | | | |
| VW/Audi | 5 | 0 | 6 |
| (Schlaggewicht 500 g) | | | |
| DIN 73378 | 0 | 0 | 0 |

## Patentansprüche

1. Verwendung einer Formmasse mit Polyamidmatrix, die folgende Komponenten enthält:
I. 60 bis 96,5 Gew.-Teile Polyamid,
II. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
III. 0,5 bis 20 Gew.-Teile eines Copolymeren, das Einheiten der folgenden Monomere enthält:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
- Acrylsäure bzw. Methacrylsäure bzw. deren Salzen,
- Estern von Acrylsäure bzw. Methacrylsäure mit einem C₁⁻ bis C₁₂-Alkohol,
- Acrylnitril bzw. Methacrylnitril,
- Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß I., II. und III. 100 beträgt,
**dadurch gekennzeichnet,**
**dass** das Polyamid einen Überschuss an Aminoendgruppen gegenüber den Carboxylendgruppen besitzt, zur Herstellung eines Konstruktionsteils im Bereich der Automobilindustrie ausgewählt aus der Gruppe Rohre, Einfüllstutzen, Behälter, Quickconnectoren, Pumpengehäuse, Kraftstofffiltergehäuse, Ventilgehäuse, Anbindungselemente an Kunststoffkraftstoffbehältern, Kabelbeschichtungen für Elektrokabel und Gehäuse für Hydraulikzylinder.

2. Verwendung gemäß Anspruch 1,
**dadurch gekennzeichnet,**
**dass** das Copolymere der Komponente III folgende Zusammensetzung hat:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
- Acrylsäure bzw. Methacrylsäure bzw. deren Salzen,
- Estern von Acrylsäure bzw. Methacrylsäure mit einem C₁- bis C₁₂-Alkohol,
- Acrylnitril bzw. Methacrylnitril,
- Acrylamiden bzw. Methacrylamiden,
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

3. Verwendung gemäß einem der vorhergehenden Ansprüche,
**dadurch gekennzeichnet,**
**dass** das Polyamid ausgewählt ist aus der Gruppe PA 46, PA 66, PA 68, PA 610, PA 612, PA 410, PA 810, PA 1010, PA 412, PA 1012, PA 1212, PA 6, PA 7, PA 8, PA 9, PA 10, PA 11 und PA 12.

4. Verwendung gemäß einem der vorhergehenden Ansprüche,
**dadurch gekennzeichnet,**
**dass** in der Komponente I. 0,1 bis 10 Gew.-Teile des Polyamids als Polyamin-Polyamid-Copolymer vorliegen, das unter Verwendung folgender Monomere hergestellt wurde:
a) 0,5 bis 25 Gew.-%, bezogen auf das Polyamin-Polyamid-Copolymer, eines Polyamins mit mindestens 4 Stickstoffatomen und einem zahlenmittleren Molekulargewicht Mₙ von mindestens 146 g/mol sowie
b) polyamidbildende Monomere, ausgewählt aus Lactamen, ω-Aminocarbonsäuren und/oder äquimolaren Kombinationen von Diamin und Dicarbonsäure.

5. Verwendung gemäß einem der vorhergehenden Ansprüche,
**dadurch gekennzeichnet,**
**dass** die Formmasse 1 bis 25 Gew.-% Weichmacher enthält.

6. Verwendung gemäß einem der vorhergehenden Ansprüche,
**dadurch gekennzeichnet,**
**dass** die Formmasse antielektrostatisch bzw. elektrisch leitfähig eingestellt ist.

7. Formteil, hergestellt aus der gemäß einem der vorhergehenden Ansprüche verwendeten Formmasse,
**dadurch gekennzeichnet,**
**dass** es ein Konstruktionsteil im Bereich der Automobilindustrie ist, ausgewählt aus der Gruppe Rohre, Einfüllstutzen, Behälter, Quickconnectoren, Pumpengehäuse, Kraftstofffiltergehäuse, Ventilgehäuse, Anbindungselemente an Kunststoffkraftstoffbehältern, Kabelbeschichtungen für Elektrokabel und Gehäuse für Hydraulikzylinder.

8. Formteil gemäß Anspruch 7,
**dadurch gekennzeichnet,**
**dass** es eine Kraftstoffleitung, ein Tankeinfüllrohr, eine Vapor Line, eine Tankstellenleitung, eine Kühlflüssigkeitsleitung, eine Klimaanlagenleitung, ein Kraftstoffbehälter, ein Quickconnector, ein Pumpengehäuse, ein Kraftstoffiltergehäuse, ein Aktivkohlekanister, ein Ventilgehäuse, ein Schwalltopf, ein Anbindungselement an einem Kunststoffkraftstoffbehälter, ein Tankeinfüllstutzen, eine Kabelbeschichtung für ein Elektrokabel, ein Gehäuse für einen Hydraulikzylinder, eine Scheibenwaschanlagenleitung, eine Kupplungsleitung, eine Unterdruckleitung, eine Entlüftungsleitung, eine Hydraulikleitung oder eine Druckluftbremsleitung ist.

9. Formteil gemäß einem der Ansprüche 7 und 8,
**dadurch gekennzeichnet,**
**dass** es die gemäß einem der Ansprüche 1 bis 6 verwendete Formmasse als eine von mehreren Schichten enthält.

10. Formteil gemäß Anspruch 9,
**dadurch gekennzeichnet,**
**dass** es ein Mehrschichtrohr ist.

11. Formteil gemäß einem der Ansprüche 7 bis 10, hergestellt durch Extrusion, Coextrusion, Blasformen oder Spritzguss.

## Claims

1. Use of a molding composition with polyamide matrix which comprises the following components:
I. from 60 to 96.5 parts by weight of polyamide,
II. from 3 to 39.5 parts by weight of an impact-modifying component which contains acid anhydride groups, where the impact-modifying component has been selected from the group consisting of ethylene/α-olefin copolymers and styrene-ethylene/butylene block copolymers,
III. from 0.5 to 20 parts by weight of a copolymer which contains units of the following monomers:
a) from 20 to 94.5% by weight of one or more α-olefins having from 2 to 12 carbon atoms,
b) from 5 to 79.5% by weight of one or more acrylic compounds, selected from the group consisting of
- acrylic acid and methacrylic acid and salts thereof,
- esters of acrylic acid and/or of methacrylic acid with a C₁-C₁₂ alcohol,
- acrylonitrile and methacrylonitrile,
- acrylamides and methacrylamides,
c) from 0.5 to 50% by weight of an olefinically unsaturated epoxide, carboxylic anhydride, carboximide, oxazoline or oxazinone,
where the total of the parts by weight of components I, II and III is 100,
**characterized in that**
the polyamide has more amino end groups than carboxyl end groups, for producing an engineering component in the automotive industry sector selected from the group consisting of tubes, filler necks, containers, quick connectors, pump housings, fuel-filter housings, valve housings, connectors to plastic fuel tanks, cable coatings for electrical cables and housings for hydraulic cylinders.

2. Use according to Claim 1,
**characterized in that**
the copolymer of component III has the following makeup:
a) from 20 to 94.5% by weight of one or more α-olefins having from 2 to 12 carbon atoms,
b) from 0 to 79.5% by weight of one or more acrylic compounds, selected from the group consisting of
- acrylic acid and methacrylic acid and salts thereof,
- esters of acrylic acid and/or of methacrylic acid with a C₁-C₁₂ alcohol,
- acrylonitrile and methacrylonitrile,
- acrylamides and methacrylamides,
c) from 0.5 to 80% by weight of an ester of acrylic acid or methacrylic acid, where the ester contains an epoxy group,
where the total of b) and c) is at least 5.5% by weight.

3. Use according to either of the preceding claims,
**characterized in that**
the polyamide has been selected from the group consisting of nylon-4,6, nylon-6,6, nylon-6,8, nylon-6,10, nylon-6,12, nylon-4,10, nylon-8,10, nylon-10,10, nylon-4,12, nylon-10,12, nylon-12,12, nylon-6, nylon-7, nylon-8, nylon-9, nylon-10, nylon-11 and nylon-12.

4. Use according to any of the preceding claims,
**characterized in that**
in component I, from 0.1 to 10 parts by weight of the polyamide are in the form of polyamine-polyamide copolymer which has been prepared using the following monomers:
a) from 0.5 to 25% by weight, based on the polyamine-polyamide copolymer, of a polyamine having at least 4 nitrogen atoms and a number-average molar mass Mₙ of at least 146 g/mol, and
b) polyamide-forming monomers selected from the group consisting of lactams, ω-aminocarboxylic acids and/or equimolar combinations of diamine and dicarboxylic acid.

5. Use according to any of the preceding claims,
**characterized in that** the molding composition contains from 1 to 25% by weight of plasticizer.

6. Use according to any of the preceding claims,
**characterized in that** the molding composition has been rendered antistatic and/or electrically conductive.

7. Molding produced from the molding composition used according to any of the preceding claims,
**characterized in that** it is an engineering component in the automotive industry sector, selected from the group consisting of tubes, filler necks, containers, quick connectors, pump housings, fuel-filter housings, valve housings, connectors to plastic fuel tanks, cable coatings for electrical cables and housings for hydraulic cyclinders.

8. Molding according to Claim 7,
**characterized in that** it is a fuel line, a tank-filling pipe, a vapor line, a fuel-pump line, a coolant-liquid line, an air-conditioning-system line, a fuel container, a quick connector, a pump housing, a fuel-filter housing, an activated-carbon canister, a valve housing, an anti-surge cup, a connector to a plastic fuel tank, a tank filler neck, a cable coating for an electrical cable, a housing for a hydraulic cylinder, a windshield-wash-system line, a clutch line, a reduced-pressure line, a ventilation line, a hydraulic line or an air-brake line.

9. Molding according to either of Claims 7 and 8,
**characterized in that** it comprises the molding composition used according to any of Claims 1 to 6, as one of two or more layers.

10. Molding according to Claim 9,
**characterized in that** it is a tube having two or more layers.

11. Molding according to any of Claims 7 to 10, produced by extrusion, coextrusion, blow molding or injection molding.

## Revendications

1. Utilisation d'une masse à mouler avec une matrice de polyamide qui contient les composants suivants :
I. 60 à 96,5 parts en poids d'un polyamide,
II. 3 à 39,5 parts en poids d'un composant de résilience qui contient des groupes anhydride acide, le composant de résilience étant sélectionné parmi des copolymères d'éthylène/α-oléfine et des copolymères blocs de styrène-éthylène/butylène,
III. 0,5 à 20 parts en poids d'un copolymère qui contient des unités des monomères suivants :
a) 20 à 94,5 % en poids d'une ou plusieurs α-oléfines avec 2 à 12 atomes de C,
b) 5 à 79,5 % en poids d'un ou plusieurs composés acryliques sélectionnés parmi :
- l'acide acrylique ou l'acide méthacrylique ou leurs sels,
- les esters d'acide acrylique ou d'acide méthacrylique avec un alcool en C₁ à C₁₂,
- l'acrylonitrile ou le méthacrylonitrile,
- les acrylamides ou méthacrylamides,
c) 0,5 à 50 % en poids d'un époxyde oléfiniquement insaturé, d'un anhydride d'acide carboxylique, d'un imide d'acide carboxylique, d'oxazoline ou d'oxazinone,
la somme des parts en poids des composants selon I, II et III faisant 100,
**caractérisée en ce que**
le polyamide possède un excès en groupes terminaux amino par rapport aux groupes terminaux carboxyle, en vue de la préparation d'une pièce de construction dans le domaine de l'industrie automobile, sélectionnée dans le groupe des tuyaux, tubulures de remplissage, réservoirs, connecteurs rapides, carters de pompe, carters de filtre à carburant, boîtes à soupape, éléments de raccordement à des réservoirs de carburant en plastique, gaines pour câbles électriques et boîtiers pour cylindre hydraulique.

2. Utilisation selon la revendication 1,
**caractérisée en ce que**
le copolymère du composant III présente la composition suivante :
a) 20 à 94,5 % en poids d'une ou plusieurs α-oléfines avec 2 à 12 atomes de C,
b) 0 à 79,5 % en poids d'un ou plusieurs composés acryliques, sélectionnés parmi
- l'acide acrylique ou l'acide méthacrylique ou leurs sels,
- les esters d'acide acrylique ou d'acide méthacrylique avec un alcool en C₁ à C₁₂,
- l'acrylonitrile ou le méthacrylonitrile,
- les acrylamides ou les méthacrylamides,
c) 0,5 à 80 % en poids d'un ester d'acide acrylique ou d'acide méthacrylique, qui contient un groupe époxyde,
la somme de b) et c) donnant au moins 5,5 % en poids.

3. Utilisation selon l'une des revendications précédentes,
**caractérisée en ce que**
le polyamide est sélectionné parmi le groupe PA 46, PA 66, PA 68, PA 610, PA 612, PA 410, PA 810, PA 1010, PA 412, PA 1012, PA 1212, PA 6, PA 7, PA 8, PA 9, PA 10, PA 11 et PA 12.

4. Utilisation selon l'une des revendications précédentes,
**caractérisée en ce que**
le composant I contient 0,1 à 10 parts en poids du polyamide comme copolymère de polyamine-polyamide, qui a été préparé en utilisant les monomères suivants :
a) 0,5 à 25 % en poids par rapport au copolymère polyamine-polyamide d'une polyamine avec au moins 4 atomes d'azote et un poids moléculaire Mₙ en moyenne arithmétique d'au moins 146 g/mol ainsi que
b) des monomères formant du polyamide, sélectionnés à partir de lactames, d'acides ω-aminocarboxyliques et/ou de combinaisons équimolaires de diamine et d'acide dicarboxylique.

5. Utilisation selon l'une des revendications précédentes,
**caractérisée en ce que**
la masse à mouler contient 1 à 25 % en poids d'un plastifiant.

6. Utilisation selon l'une des revendications précédentes,
**caractérisée en ce que**
la masse à mouler est électriquement conductrice ou antiélectrostatique.

7. Pièce moulée, préparée à partir de la masse à mouler utilisée selon l'une des revendications précédentes,
**caractérisée en ce**
**qu'**il s'agit d'une pièce de construction dans le domaine de l'industrie automobile sélectionnée dans le groupe des tuyaux, tubulures de remplissage, réservoirs, connecteurs rapides, carters de pompe, carters de filtre à carburant, boîtes à soupape, éléments de raccordement à des réservoirs de carburant en plastique, gaines pour câbles électriques et boîtiers pour cylindre hydraulique.

8. Pièce moulée selon la revendication 7,
**caractérisée en ce**
**qu'**il s'agit d'une conduite de carburant, d'une tubulure de remplissage du réservoir, d'une Vapor Line, d'un tuyau de station-service, d'une conduite de liquide de refroidissement, d'une conduite d'installation de climatisation, d'un réservoir de carburant, d'un connecteur rapide, d'un carter de pompe, d'un carter de filtre à carburant, d'un filtre à charbon actif, d'une boîte à soupape, d'un réceptacle, d'un élément de raccordement à un réservoir à carburant en plastique, d'une tubulure de remplissage du réservoir, d'une gaine pour câble électrique, d'un boîtier pour un cylindre hydraulique, d'une conduite pour une installation de lave-glaces, d'une conduite d'accouplement, d'une conduite de sous-pression, d'une conduite de purge, d'une conduite hydraulique ou d'une conduite de freinage à air comprimé.

9. Pièce moulée selon l'une des revendications 7 et 8,
**caractérisée en ce**
**qu'**elle contient une masse à mouler utilisée selon l'une des revendications 1 à 6 en tant qu'une couches parmi plusieurs.

10. Pièce moulée selon la revendication 9,
**caractérisée en ce**
**qu'**il s'agit d'un tube en plusieurs couches.

11. Pièce moulée selon l'une des revendications 7 à 10, préparée par extrusion, coextrusion, formage ou coulage par injection.
